## Europäisches Patentamt
## European Patent Office
## Office européen des brevets

(19)

(11) Publication number: **0 018 095**
**B1**

(12) **EUROPEAN PATENT SPECIFICATION**

(45) Date of publication of patent specification: **04.07.84**

(21) Application number: **80300892.9**

(22) Date of filing: **21.03.80**

(51) Int. Cl.³: **A 01 D 75/30, F 15 B 1/02**

(54) **Turf maintenance machine.**

| (30) Priority: **28.03.79 GB 7910808** | (73) Proprietor: **RANSOMES SIMS & JEFFERIES, PUBLIC LIMITED COMPANY** **Nacton Works** **Ipswich IP3 9QG (GB)** |
|---|---|
| (43) Date of publication of application: **29.10.80 Bulletin 80/22** | |
| (45) Publication of the grant of the patent: **04.07.84 Bulletin 84/27** | (72) Inventor: **Jupp, Robert Alfred** **deceased** **\* (GB)** Inventor: **Aldred, Edward John** **Gipping House Great Blakenham** **Ipswich, Suffolk (GB)** |
| (84) Designated Contracting States: **AT BE CH DE FR GB IT LU NL SE** | |
| (56) References cited: **FR - A - 2 215 884** **FR - A - 2 241 233** **US - A - 3 641 748** **US - A - 3 717 995** **US - A - 3 832 835** | (74) Representative: **Coleman, Stanley et al, MATHYS & SQUIRE 10 Fleet Street London EC4Y 1AY (GB)** |

Courier Press, Leamington Spa, England.

### Description

This invention relates to turf maintenance machines and particularly though not exclusively to grass mowing machines having a plurality of cutter units and hydraulically actuated means for effecting lowering into, provision of at least partial counterbalance in, and lifting from, a working position of the cutter units.

In grass mowing machines it is desirable that the cutter units are held in a partially counterbalanced fashion, allowing the units to float over the ground.

Partial counterbalancing of units and lowering and raising them into and out of service is provided for in a variety of ways in prior art machines. For example, partial counterbalancing forces may be produced and transmitted mechanically with the aid of torsion springs. The spring providing the counterbalancing force may be a helically-wound torsion spring which applies torque to a lifting and lowering arm on which cutter units are mounted. Such springs are usually large, expensive and difficult to make, and provision must be made for pre-tensioning during assembly and service. In addition, the springs are liable to fatigue failure, and a separate mechanism is required to lift and lower the arm. This mechanism typically includes an hydraulic ram containing hydraulic oil and connected to an oil reservoir and a pump. To raise the arm and an attached unit, oil is pumped from the reservoir into the ram to extend the ram.

It has previously been proposed to provide apparatus of the kind which is operable to enable not only lifting and lowering of a unit by an hydraulic means, but also hydraulic counterbalancing. One problem with such apparatus in the past has been that as a result of lowering the unit, at least some of the pressure in the accumulator is lost. The operator has accordingly had to select the "lift" position to ensure that the accumulator is fully charged to the selected pressure for providing the desired degree of partial counterbalancing of the unit in its working position. Thereafter the unit could be lowered to that position. The problem faced by an operator is aggravated for gang machines with several independently operable cutter units which may be lifted, lowered and counterbalanced at different times.

US Patent 3,717,995 (Case) shows an hydraulic flotation system for a header including an accumulator which is charged to the full lifting pressure during lifting of the header. During lowering, the pressure drops to a suitable counterbalancing pressure. The system disclosed is suitable for controlling a single header and in order to give independent control to a number of headers, a separate accumulator would be needed for each.

US Patent 3,832,835 (Hall) relates to a tractor having an hydraulic circuit with a series of valves and associated rams and working units, but does not include an accumulator to provide counterbalancing. In the "float" position of a valve, the associated ram is connected to the fluid pump.

It is an object of the present invention to provide an improved turf maintenance machine having a plurality of working units and hydraulically actuated means for effecting lowering into, provision of at least partial counterbalance in, and lifting from, a working position of the units, in which the units are independently controllable and which can be constructed relatively inexpensively.

According to the invention there is provided a turf maintenance machine having a plurality of working units with respective working unit lifting rams and hydraulically actuated means for effecting lowering into, provision of at least partial counterbalance in, and lifting from, a working position of each working unit, and hydraulically actuated means comprising a pump, a hydraulic fluid reservoir, an hydraulic accumulator, respective pressure relief valves connecting the pump and the accumulator with the reservoir and a plurality of selector valves, wherein each said selector valve has a valve body formed with ports having six fluid lines connected therewith and a movable selector member within said body, with the pump capable of being connected to each said valve *via* respective first and second of said fluid lines in parallel, the hydraulic fluid reservoir is capable of being connected to each said valve *via* respective third and fourth of said fluid lines, and with a working unit lifting ram connected to each said valve *via* respective fifth of said fluid lines and the hydraulic accumulator connected to each said valve *via* respective sixth of said fluid lines, and the selector member of each valve being movable from a "neutral" position in which the first and third fluid lines thereof are connected *via* the valve selectively to a "lift" position in which the pump is connected by way of the second fluid line thereof with the respective lifting ram, to a "lower" position in which the lifting ram is connected by way of the fourth fluid line thereof to the reservoir and the pump is connected by way of the second fluid line thereof to the accumulator, or to a "counterbalance" position in which the lifting ram is connected to the accumulator *via* the valve and the first and third fluid lines thereof are connected *via* the valve, whereby when all selector members are in the "neutral" or "counterbalance" position, the pump connects with the reservoir by way of serially connected paths in the valves afforded in each valve between the first and third fluid lines thereof, whilst if the selector member of any valve is moved to the "lift" or "lower" position, this connection between pump and reservoir is blocked at that valve.

With the hydraulically actuated means in a machine of the present invention, the accumulator is charged from the pump as fluid discharges from a ram during lowering of a unit. This allows an operator to commence cutting with a unit which is initially resting on the ground by simply moving the corresponding valve to the counterbalance position, knowing that the accumulator will be charged to the required extent to provide the desired partial counterbalance during working of that unit.

For example, in a machine with two valves, each having a selector member independently movable to actuate respective working unit lifting rams, the valves can be connected to the pump by way of respective second fluid lines to the reservoir by way of respective fourth fluid lines, to the accumulator by way of respective sixth fluid lines and to respective rams by way of respective fifth fluid lines. The accumulator is charged during lowering of either unit and is connected via a respective valve to any unit which is being counterbalanced and consequently the single accumulator serves to provide counterbalance for each unit when required.

In one preferred form the invention comprises a grass mowing machine having at least one working unit in the form of a cutter unit.

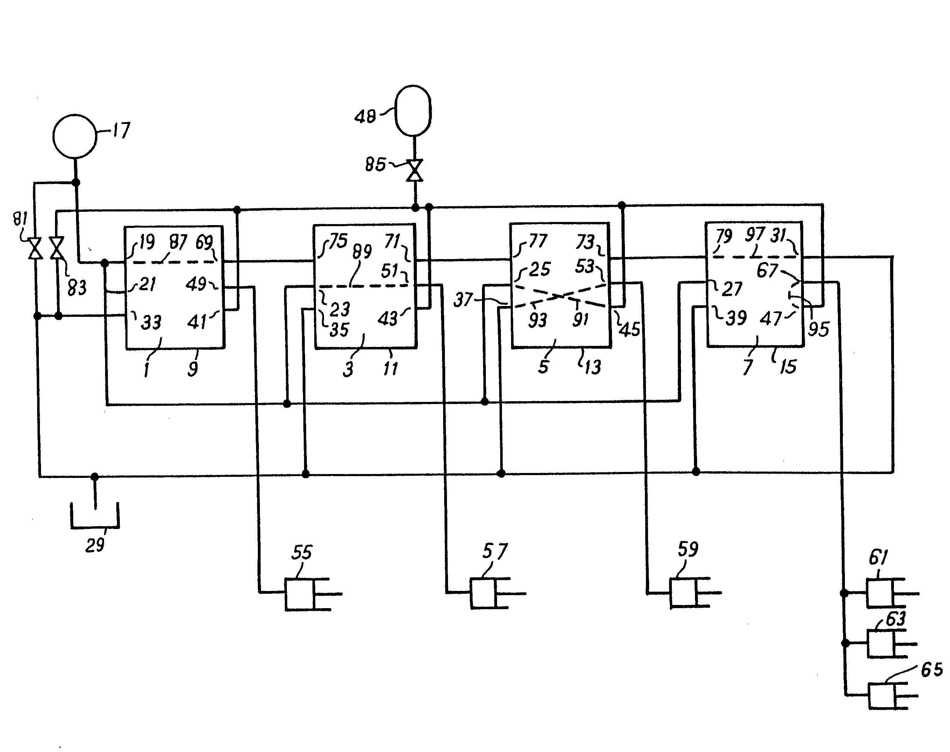

One embodiment of the invention will now be described, by way of example, with reference to the accompanying drawing which is a circuit diagram illustrating hydraulically actuated means for a grass mowing machine.

Although the embodiment of the invention hereinafter described concerns a grass mowing machine, the invention is broadly applicable, as will be apparent to those skilled in the art, to turf maintenance machines in which a working unit is raised and lowered with respect to and held partially counterbalanced in a working position.

Four selector valves, indicated by the numerals 1, 3, 5 and 7, respectively comprise a valve body 9, 11, 13 and 15 formed with six ports and a movable selector member (not shown). Suitably the selector valves are manually operable spool valves each having a selector member which may be moved from its "neutral" position against a self-centering spring and including locking means for locking the spool in the "counterbalance" position.

Each valve has six fluid lines connected to respective ports. A pump 17 which operates continuously is connected via a first fluid line to port 19 of valve 1 and via second fluid lines to ports 21, 23, 25 and 27 of valves 1, 3, 5 and 7 respectively. An hydraulic reservoir 29 is connected to port 31 of valve 7 via the third fluid line of that valve and to ports 33, 35, 37 and 39 of valves 1, 3, 5 and 7 via their respective fourth fluid lines. Ports 41, 43, 45 and 47 are connected to an hydraulic accumulator 48 via respective sixth fluid lines, ports 49, 51 and 53 are connected via fifth fluid lines to respective cutter unit lifting rams 55, 57 and 59, and rams 61, 63 and 65 are connected to a common outlet port 67 of valve 7 via the fifth fluid line of that valve. Ports 69, 71 and 73 of valves 1, 3 and 5 are connected to ports 75, 77 and 79 of valves 3, 5 and 7 via respective first fluid lines. The circuit also includes respective pressure relief valves 81 and 83 connecting the pump 17 and the accumulator 48 with the reservoir 29. Valve 81 is a protective relief valve and permits flow from the pump to the reservoir if fluid pressure rises above the normal lifting pressure. Valve 83 is set to permit fluid flow from the accumulator to the reservoir when the pressure exceeds the desired counterbalance pressure. Thus it is by varying the pressure at which this valve opens that the amount of partial counterbalance to be applied to cutter units can be selected to meet working needs. A cut-off valve 85 is provided to permit isolation of the accumulator.

The hydraulically actuated means illustrated in the diagram effects lowering into, provision of at least partial counterbalance in and lifting from the working position of cutter units (not shown). Each cutter unit is mounted on a lifting arm which is pivotally moved by a respective lifting ram. The four selector members are independently movable into "neutral", "lift", "lower" and "counterbalance" positions. It is the provision of two fluid lines connected to the pump and a further two lines connected to the reservoir which makes independent operation of the valves possible and allows the operator freedom of choice as regards which unit or units are to be operated. Although in the diagram each valve is shown in a particular position, each selector member is movable in all four positions. Valve 1 is shown in the "neutral" position and valves 3, 5 and 7 are in "lift", "lower" and "counterbalance" positions respectively. Broken lines indicate connections made via the selector members between ports. It is to be understood that passage of fluid from all the other ports, not shown connected, is blocked at those ports.

In the "lift" position, shown in valve 3, pump 17 is connected with cutter unit lifting ram 57 by way of connection 89 between port 23 and port 51, thereby extending ram 57 and lifting its cutter unit (not shown) out of its working position. When the ram is fully extended, fluid flows via pressure relief valve 81 to the reservoir. As stated above, flow from the other ports of the valve is blocked, and in particular port 43 to the accumulator 48 is blocked.

Valve 5 is shown in the "lower" position, in which the pump is connected to the accumulator by way of ports 25 and 45 and connection 91, thereby charging the accumulator to the required pressure for providing counterbalance. When this pressure is reached relief valve 83 opens, permitting flow from the accumulator to the reservoir. Further, ram 59 discharges to the reservoir via connection 93 thereby lowering its cutter unit.

Valve 7 is shown in the "counterbalance" position in which the accumulator is connected to rams 61, 63 and 65 by way of connection 95, providing partial counterbalance for units in their working positions. As rams 61, 63 and 65 are connected to a common port 67, their cutter units are actuated simultaneously. A further connection 97 is made between port 79 and port 31.

In valve 1, in the "neutral" position, connection is made between port 19 and port 69. The other ports are blocked at the valve and in particular port 49 is blocked, preventing fluid flowing from ram 55, thus holding the ram fixed. It will be seen that if all valves were in "neutral" or "counterbalance" positions, the pump would connect with the reservoir by way of serially connected paths in the valves afforded in each valve between the pairs of ports connected with the first and third fluid lines of each valve. However, since valves 3 and 5 are in the "lift" and "lower" positions respectively, this connection is blocked at those valves.

If it is desired to move, the cutter unit associated with ram 55, for example, from a raised position to the ground, the spool of valve 1 is moved by the operator against a self-centering spring to the "lower" position as shown for valve 5, and the unit is lowered until it rests with its full weight on the ground. Accumulator 48, which may not initially have been charged to the required partial counterbalancing pressure (that is, the relief pressure of valve 83), will be fully charged to the desired extent during lowering. To commence working with the unit partially counterbalanced, the operator moves the valve to the "counterbalance" position shown for valve 7, and locks the valve in this position, thereby connecting the ram 55 to the accumulator via the valve and partially counterbalancing the weight of the associated unit on the ground during the cutting operation.

Cutter units can be removed from their lifting arms when they are in their working position. The circuit includes a cut-off valve 85 which can be manually operated to isolate the accumulator, thereby preventing a lifting arm from rising uncontrollably under accumulator pressure when its cutter unit is removed.

The circuit illustrated includes four selector valves, but it will be understood that a machine according to the invention may have any appropriate number of valves, depending upon operational requirements.

The machine of the present invention provides for independent control of a number of working units in a particularly convenient and reliable manner. The hydraulic circuit includes a single accumulator which provides counterbalancing for any one or several working units whenever desired. The fact that only a single accumulator is required permits the circuit to be constructed relatively cheaply compared with alternative systems including torsion springs or several accumulators.

## Claims

1. A turf maintenance machine having a plurality of working units with respective working unit lifting rams and hydraulically actuated means for effecting lowering into, provision of at least partial counterbalance in, and lifting from, a working position of each working unit, the hydraulically actuated means comprising a pump (17), an hydraulic fluid reservoir (29), an hydraulic accumulator (48), respective pressure relief valves (81, 83) connecting the pump and the accumulator with the reservoir and a plurality of selector valves (1, 3, 5, 7), wherein each said selector valve has a valve body formed with ports having six fluid lines connected therewith and a movable selector member within said body, with the pump capable of being connected to each said valve via respective first and second of said fluid lines in parallel, the hydraulic fluid reservoir is capable of being connected to each said valve via respective third and fourth of said fluid lines, and with a working unit lifting ram connected to each said valve via respective fifth of said fluid lines and the hydraulic accumulator connected to each said valve via respective sixth of said fluid lines, and the selector member of each valve being movable from a "neutral" position in which the first and third fluid lines thereof are connected via the valve selectively to a "lift" position in which the pump is connected by way of the second fluid line thereof with the respective lifting ram, to a "lower" position in which the lifting ram is connected by way of the fourth fluid line thereof to the reservoir and the pump is connected by way of the second fluid line thereof to the accumulator, or to a "counterbalance" position in which the lifting ram is connected to the accumulator via the valve and the first and third fluid lines thereof are connected via the valve, whereby when all selector members are in the "neutral" or "counterbalance" position, the pump connects with the reservoir by way of serially connected paths in the valves afforded in each valve between the first and third fluid lines thereof, whilst if the selector member of any valve is moved to the "lift" or "lower" position, this connection between pump and reservoir is blocked at that valve.

2. A turf maintenance machine as claimed in Claim 1, wherein two or more working unit rams for simultaneous actuation are connected to a common fluid line from a selector valve.

3. A turf maintenance machine as claimed in any preceding claim, wherein the selector member is a spool and the selector valve is a manually operable spool valve.

4. A turf maintenance machine as claimed in Claim 3, wherein the spool is movable from the "neutral" position to the "lower", "lift" or "counterbalance position against a self-centering spring, and locking means are provided for locking the spool in the "counterbalance" position.

5. A turf maintenance machine as claimed in any preceding claim, wherein the hydraulically actuated means includes a cut-off valve operable to isolate the accumulator.

6. A turf maintenance machine as claimed in any preceding claim, wherein the machine is a grass mowing machine having a plurality of working units in the form of cutter units.

## Revendications

1. Machine pour l'entretien de prairies ou de gazons comportant plusieurs organes actifs avec leurs vérins de levage respectifs et un dispositif actionné par voie hydraulique pour effectuer la descente en position active, l'établissement d'une compensation ou d'un équilibrage au moins partiel dans cette position active, et la montée à partir de cette position active de chaque organe actif, le dispositif hydraulique comprenant une pompe (17), un réservoir à fluide hydraulique (29), un accumulateur hydraulique (48), des soupapes de sûreté respectives (81), (83) reliant la pompe et l'accumulateur au réservoir et plusieurs valves de distribution (1, 3, 5, 7). dont chacune a un corps de valve pourvu d'orifices auxquels sont reliés six conduits de passage du fluide et un élément distributeur mobile à l'intérieur de ce corps, la pompe pouvant être mise en liaison avec chacune des ses valves par l'entremise du premier et du deuxième conduit respectif en parallèle, le réservoir de fluide hydraulique pouvant être mis en liaison avec chacune des valves précitées par l'entremise du troisième et du quatrième conduit respectif, un vérin de levage d'organe actif étant relié à chacune des valves par l'entremise du cinquième conduit respectif et l'accumulateur hydraulique étant relié à chacune des valves par le sixième conduit respectif et l'élément distributeur de chacune des valves étant mobile en partant d'une position "neutre", dans laquelle son premier et son deuxième conduit sont en liaison par l'entremise de la valve, sélectivement vers une position de "levage" dans laquelle la pompe est en liaison par l'entremise de son deuxième conduit, avec le vérin de levage respectif, vers une position de "descente" dans laquelle le vérin de levage est en liaison par l'entremise de son quatrième conduit, avec le réservoir, et la pompe est en liaison, par l'entremise de son deuxième conduit, avec l'accumulateur, ou vers une position de "compensation" ou d'"équilibrage" dans laquelle le vérin de levage est en liaison avec l'accumulateur par l'entremise de la valve, et son premier et son troisième conduit sont en liaison par l'entremise de la valve, la disposition étant telle que lorsque tous les distributeurs se trouvent en position "neutre" ou en position de "compensation", la pompe se raccorde au réservoir au moyen de voies reliées en série dans les valves et prévues dans chaque valve entre son premier et son troisième conduit, tandis que si le distributeur d'une quelconque valve est mis dans la position "levage" ou "descente", cette connexion entre la pompe et le réservoir est bloquée au niveau de cette valve.

2. Machine pour l'entretien de prairies ou de gazons suivant la revendications 1, dans laquelle deux ou plusieurs vérins de levage à action simultanée sont raccordés à un conduit commun provenant d'une valve de distribution.

3. Machine pour l'entretien de prairies ou de gazons suivant l'une quelconque des revendications précédentes, dans laquelle le distributeur est un tiroir-piston et la valve de distribution est une valve à tiroir-piston actionnée manuellement.

4. Machine pour l'entretien de prairies ou de gazons suivant la revendication 3, dans laquelle le tiroir-piston est déplaçable de la position "neutre" à la position "descente", "levage" ou "compensation" à l'encontre d'un ressort à auto-centrage et des moyens sont prévus pour bloquer le tiroir-piston en position de "compensation".

5. Machine pour l'entretien de prairies ou de gazons suivant l'une quelconque des revendications précédentes, dans laquelle le dispositif hydraulique comporte une valve de fermeture qui peut être actionnée pour isoler l'accumulateur.

6. Machine pour l'entretien de prairies ou de gazons suivant l'une quelconque des revendications précédentes, dans laquelle la machine est une tondeuse à gazon comportant plusieurs organes actifs sous forme d'organes de coupe.

## Patentansprüche

1. Rasenpflegemaschine mit einer Mehrzahl von Arbeitsgeräten, zugehörigen Hubhydrauliken und einer hydraulischen Steuerung, mit der jedes Arbeitsgerät in eine Arbeitsstellung abgesenkt, aus einer Arbeitsstellung angehoben und midestens teilweise mit einem Gewichtsausgleich versehen werden kann, wobei die hydraulische steuerung eine Pumpe (17), einen Druckmittelsammelbehälter (29), einen hydraulischen Druckspeicher (48), zugehörige Überdruckventile (81, 83) zwischen der Pumpe, dem Druckspeicher und dem Druckmittelsammelbehälter und eine Mehrzahl von Umschaltventilen (1, 3, 5, 7) enthält, dadurch gekennzeichnet, daß am Ventilgehäuse jedes mit bewegbarem Ventilkörper versehenen Umschaltventils sechs Leitungsanschlüsse vorgesehen sind, daß die Pumpe über erste und zweite parallel geschaltete Leitungen mit jedem der Umschaltventile verbindbar ist, daß der Druckmittelsammelbehälter über dritte und vierte Leitungen mit jedem der Umschaltventile verbindbar ist, daß jedes der Umschaltventile über fünfte Leitungen an eine Geräte-Hubhydraulik und über entsprechende sechste Leitungen am hydraulischen Druckspeicher angeschlossen ist, daß der Ventilkörper eines jeden Umschaltventiles aus einer "Neutral"-Stellung, in der innerhalb des Ventils die ersten und dritten Leitungen verbunden sind, verschoben werden kann in eine "Hub"-Stellung, in der die Pumpe über die zweite Leitung mit der Hubhydraulik verbunden ist, in eine "Senk"-Stellung, in der die Hubhydraulik über die vierte Leitung mit dem Druckmittelsammelbehälter und die Pumpe über die zweite Leitung mit dem Druckspeicher verbunden ist, oder in eine "Gewichtsausgleich"-Stellung, in der die Hubhydraulik über das Ventil mit dem Druckspeicher und ferner auch die erste und dritte Leitung innerhalb des Ventils verbunden sind, so daß in "Neutral"- oder "Gewichtsausgleich"-Stellung sämtlicher Umschaltventile die Pumpe über in Reihe geschaltete Pfade in den Umschaltventilen zwischen deren ersten und dritten Leitungsanschlüssen mit dem Sammelbehälter verbunden ist, wohingegen bei Verstellung irgendeines der Umschaltventile in die "Hub"- oder "Senk"-Stellung die vorerwähnte Verbindung zwischen Pumpe und Druckmittelsammelbehälter in dem verstellten Ventil unterbrochen wird.

2. Rasenpflegemaschine nach Anspruch 1, dadurch gekennzeichnet, daß zwei oder mehr Geräte-Hubhydrauliken zur gleichzeitigen Betätigung mit einem gemeinsamen Auslaßanschluß eines Umschaltventiles verbunden sind.

3. Rasenpflegemaschine nach irgendeinem vorangehenden Anspruch, dadurch gekennzeichnet, daß der Ventilkörper ein Schieberkolben und das Umschaltventil ein manuell bedienbarer Kolbenschieber ist.

4. Rasenpflegemaschine nach Anspruch 3, dadurch gekennzeichnet, daß der Schieberkolben aus der "Neutral"-Stellung entgegen einer Zentrierfeder in die "Senk"-, "Hub"- oder "Gewichtsausgleich"-Stellung bewegbar ist und daß Rasten vorgesehen sind, um den Schieberkolben in der "Gewichtsausgleich"-Stellung festzusetzen.

5. Rasenpflegemaschine nach irgendeinem vorangehenden Anspruch, dadurch gekennzeichnet, daß die hydraulische Betätigungsvorrichtung mit einem Absperrventil zum Abtrennen des Druckspeichers versehen ist.

6. Rasenpflegemaschine nach irgendeinem vorangehenden Anspruch, dadurch gekennzeichnet, daß die Maschine eine Rasenmähmaschine mit mindestens einem Arbeitsgerät in Form eines Schneidwerkes ist.

0 018 095